# EUROPEAN PATENT APPLICATION

(11) **EP 3 792 170 A1**
(43) Date of publication of application: **17.03.2021**
(21) Application number: 19853259.0
(22) Date of filing: 19.12.2019
(51) Int. Cl.: B62M 6/40, B62M 11/00, B62M 7/12

(54) **DRIVING APPARATUS, AND ELECTRIC VEHICLE COMPRISING SAME**

(30) Priority: 01.07.2019 CN 201920999843 U
(71) Applicant: Sharkgulf Technology (Shanghai) Co., Ltd., Shanghai 201103 (CN)
(72) Inventor: ZHANG, Jun, Shanghai (CN); HUANG, Houzeng, Shanghai (CN)
(74) Representative: Flügel Preissner Schober Seidel
(86) International application number: PCT/CN2019/126543
(87) International publication number: WO 2021/000532

(57) **Abstract**

Some embodiments of the present application disclose a driving device and an electric bicycle including the same. The driving device includes: a first fixing frame, a second fixing frame, a power mechanism, a gear set, and an output shaft, wherein, one end of the first fixing frame is detachably connected to one end of the second fixing frame, and the other end of the first fixing frame is provided with a chamber at a side close to the second fixing frame; the power mechanism and the gear set are provided in the chamber; one end of the output shaft is connected to the gear set and the other end of the output shaft is fixed on the second fixing frame; and the power mechanism drives the gear set to move, and the gear set drives the output shaft to move. The driving device provided by the embodiments of the application has a compact structure and is relatively easy to maintain.

## Description

### CROSS-REFERENCES TO RELATED APPLICATIONS

This application claims the priority of Chinese Patent Application No. 201920999843.5, filed on July 1, 2019, and entitled "A Driving Device and Electric Bicycle Including The Same", which is hereby incorporated by reference in its entirety.

### TECHNICAL FIELD

The present application relates to the technical field of electric bicycles, and in particular, to a driving device and an electric bicycle including the same.

### BACKGROUND

The driving device of an electric bicycle was an in-wheel driving device in the early days, and a center-mounted driving device with good climbing performance is developed since the climbing performance of the in-wheel driving device is not good. In the existing center-mounted driving device, a hub is generally rotated by a belt or a chain, and the existing driving device cannot meet the needs of the existing electric bicycles.

Therefore, there is an urgent need to develop a new-type driving device.

### SUMMARY

In order to solve the above technical problems, embodiments of the present application provide a new-type driving device and an electric bicycle including the same.

To achieve the above object, the embodiments of the present application provide the following technical solutions:

According to a first aspect of the embodiments of the present application, there is provided a driving device including: a first fixing frame, a second fixing frame, a power mechanism, a gear set, and an output shaft, wherein, one end of the first fixing frame is detachably connected to one end of the second fixing frame, and the other end of the first fixing frame is provided with a chamber at a side close to the second fixing frame; the power mechanism and the gear set are provided in the chamber; one end of the output shaft is connected to the gear set and the other end of the output shaft is fixed on the second fixing frame; and the power mechanism drives the gear set to move, and the gear set drives the output shaft to move .

In one example, the first fixing frame and the second fixing frame form a "U" -shaped fixing frame.

In one example, the chamber includes a power mechanism chamber and a gear set chamber, the power mechanism is provided in the power mechanism chamber, and the gear set is provided in the gear set chamber.

In one example, the chamber is provided with a detachable chamber cover at a side away from the second fixing frame.

In one example, the gear set chamber is provided with an oil scale for detecting an amount of oil.

In one example, the other end of the output shaft is fixed on the second fixing frame through a bearing..

In one example, the power mechanism chamber is provided with a heat dissipation hole for dissipating heat from the power mechanism.

In one example, the power mechanism is a motor.

According to a second aspect of the embodiments of the present application, there is provided an electric bicycle including the driving device described above.

The embodiments of the present application have the following advantages:

The driving device provided in the embodiments of the present application outputs power provided by a power mechanism through a gear set and an output shaft, and the driving device has a compact structure and is relatively easy to maintain.

### BRIEF DESCRIPTION OF THE DRAWINGS

In order to more clearly illustrate embodiments of the present application or technical solutions in the prior art, the drawings needed to be used while describing the embodiments or the prior art will be briefly introduced. Obviously, the drawings in the following description are merely illustrative and for those skilled in the art, other drawings may be obtained by extending the provided drawings without paying creative effort.

The structures, scales, sizes, etc. shown in this description are only used to be combined with the contents disclosed in this description for those skilled in the art to learn and read, but not intended to limit the restrictions that can be implemented in this application, thus they do not have technical significance. Any modification of the structures, change of the scales, or adjustment of the sizes shall still fall within the scope of the technical content disclosed in this application without affecting the effect and objectives that can be achieved by this application.
FIG. 1 is a top view structural schematic diagram of a driving device according to an embodiment of the present application;
FIG. 2 is a structural diagram of a hub without a driving device installed according to an embodiment of the present application;
FIG. 3 is a perspective structural diagram of a first mounting frame of a driving device at an angle of view according to an embodiment of the present application;
FIG. 4 is a perspective structural diagram of a first mounting frame of a driving device at another angle of view according to an embodiment of the present application.

In the drawings: 1-first mounting frame; 11-power mechanism chamber; 12-gear set chamber; 121-oil scale; 122-gear box cover; 2-second fixing frame; 3-power mechanism; 4-gear set; 41-driving gear; 42-first driven gear; 43-second driven gear; 5-output shaft; 6-hub; 7-chamber cover.

### DETAILED DESCRIPTION

The following describes the implementation of this application by specific embodiments. Those skilled in the art can easily understand other advantages and effects of this application from the content disclosed in this specification. Obviously, the described embodiments are just some but not all embodiments of this application. Based on the embodiments in the present application, all other embodiments obtained by those skilled in the art without creative efforts shall fall within the protection scope of the present application.

The terms such as "upper", "lower", "left", "right", "middle", etc., cited in the present specification are only for the convenience of description, and are not intended to limit the implementation scope of this application. If there is no substantial change in the technical content, the change or adjustment of its relative relationship shall also fall within the implementation scope of this application..

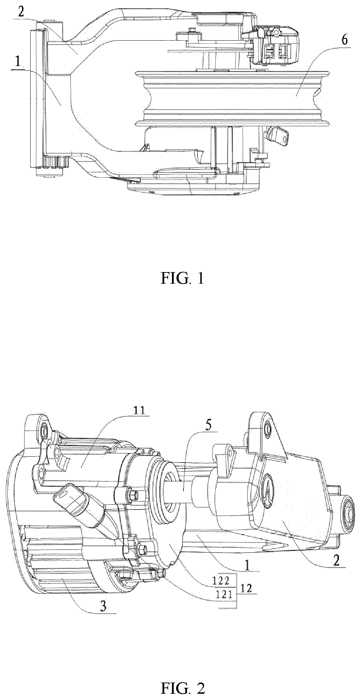

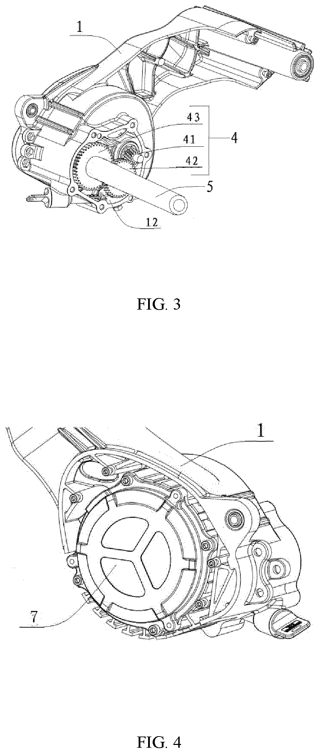

As shown in FIGS. 1 to 4, a driving device provided in this embodiment includes a first fixing frame 1, a second fixing frame 2, a power mechanism 3, a gear set 4, and an output shaft 5. The fixing frame 1 and the second fixing frame 2 form a "U"-shaped fixing frame. One end of the first fixing frame 1 is detachably connected to one end of the second fixing frame 2. The other end of the first fixing frame 1 is provided with a chamber at a side close to the second fixing frame 2, and the chamber is provided with a detachable chamber cover 7 at a side away from the second fixing frame 2. The chamber includes a power mechanism chamber 11 and a gear set chamber 12, and the power mechanism 3 is provided in the power mechanism chamber 11. In this embodiment, the power mechanism 3 is a motor. The gear set 4 is provided in the gear set chamber 12, and the gear set 4 includes a driving gear 41, a first driven gear 42 and a second driven gear 43. The driving gear 41 is provided on a rotating shaft of the power mechanism 3. The first driven gear 42 and the second driven gear 43 are rotatably provided in the gear set chamber 12 through a mounting shaft, respectively; and the first driven gear 42 is engaged with the driving gear 41, the second driven gear 43 is engaged with the first driven gear 42. The end of the output shaft 5 and the second driven gear 43 are rigidly connected with each other, and they rotate together; the other end of the output shaft 5 is fixed on the second fixing frame 2 through a bearing. The power mechanism 3 drives the gear set 4 to move, the gear set 4 drives the output shaft 5 to move, and the hub 6 is provided on the output shaft 5 and rotates with the output shaft 5 to drive the electric bicycle to move.

In one example, an oil scale 121 is provided on the gear set chamber 12 to detect the amount of oil.

In one example, the gear set chamber 12 is formed by hermetically disposing a gear box cover 122 on a side wall of the power mechanism chamber 11 close to the second fixing frame 2.

In one example, the power mechanism chamber 11 is provided with a heat dissipation hole for heat dissipation of the power mechanism.

The driving device provided in this embodiment is applicable to all types of electric bicycles available on the market.

The driving device provided in the embodiments of the present application outputs the power provided by a power mechanism through a gear set and an output shaft while maintaining high-performance climbing. The driving device has a compact structure and is relatively easy to maintain.

Although the present application has been described in detail with the general description and the specific embodiments, it is obvious to those skilled in the art that some modifications or improvements can be made on the basis of this application. Therefore, these modifications or improvements made without departing from the spirit of this application are all within the scope of protection of this application.

## Claims

1. A driving device, comprising: a first fixing frame (1), a second fixing frame (2), a power mechanism (3), a gear set (4), and an output shaft (5), wherein, one end of the first fixing frame (1) is detachably connected to one end of the second fixing frame (2), and the other end of the first fixing frame (1) is provided with a chamber at a side close to the second fixing frame (2); the power mechanism (3) and the gear set (4) are provided in the chamber; one end of the output shaft (5) is connected to the gear set (4) and the other end of the output shaft (5) is fixed on the second fixing frame (2); and the power mechanism (3) drives the gear set (4) to move, and the gear set (4) drives the output shaft (5) to move.

2. The drive device according to claim 1, wherein the first fixing frame (1) and the second fixing frame (2) form a "U"-shaped fixing frame.

3. The drive device according to claim 1 or 2, wherein the chamber comprises a power mechanism chamber (11) and a gear set chamber (12), the power mechanism (3) is provided in the power mechanism chamber (11), and the gear set (4) is provided in the gear set chamber (12).

4. The driving device according to any one of claims 1 to 3, wherein the chamber is provided with a detachable chamber cover (7) at a side away from the second fixing frame (2).

5. The driving device according to claim 3, wherein the gear set chamber (12) is provided with an oil scale (121) for detecting an amount of oil.

6. The driving device according to any one of claims 1 to 5, wherein the other end of the output shaft (5) is fixed on the second fixing frame (2) through a bearing.

7. The driving device according to claim 3 or 5, wherein the power mechanism chamber (11) is provided with a heat dissipation hole for dissipating heat from the power mechanism (3).

8. The drive device according to any one of claims 1 to 7, wherein the power mechanism (3) is a motor.

9. An electric bicycle comprising the driving device according to any one of claims 1-8.
